# EUROPEAN PATENT SPECIFICATION

(11) **EP 2 055 520 B1**
(45) Date of publication and mention of the grant of the patent: **17.04.2013**
(21) Application number: 08253516.2
(22) Date of filing: 29.10.2008
(51) Int. Cl.: B60K 11/08, F01P 11/10, B62J 17/00

(54) **Radiator cover and straddle-type vehicle having the same**
Heizkörperabdeckung und Grätschsitzfahrzeug damit
Couvercle de radiateur et véhicule de type à enfourcher doté de celui-ci

(30) Priority: 30.10.2007 JP 2007281088; 24.01.2008 JP 2008014254
(43) Date of publication of application: 06.05.2009
(73) Proprietor: Yamaha Hatsudoki Kabushiki Kaisha, Shizuoka-ken Shizuoka 438-8501 (JP)
(72) Inventor: Kawakami, Satoshi c/o Yamaha Hatsudoki Kabushiki Kaisha, Shizuoka-ken, 438-8501 (JM); Miyoshi, Nobuyuki c/o Yamaha Hatsudoki Kabushiki Kaisha, Shizuoka-ken, 438-8501 (JM)
(74) Representative: Moreland, David

(56) References cited:
- EP-A2- 1 955 939
- JP-A- 63 106 320
- US-A1- 2002 112 680

## Description

### FIELD OF THE INVENTION

The present invention relates to a radiator cover for a straddle-type vehicle and to a straddle-type vehicle having the radiator cover. More particularly, the invention relates to a radiator cover for a straddle-type vehicle, which includes a cap cover for covering a cap of a radiator and to a straddle-type vehicle having the radiator cover.

### BACKGROUND TO THE INVENTION

Small vehicles, such as straddle-type vehicles, having a radiator grille or cover attached thereto are known. For example, the generic JP-A-Sho 63106320 discloses a small vehicle provided with a radiator and a radiator grille. The radiator has a core surface disposed to face forward of the vehicle. The radiator grille is positioned in front of the radiator so as to cover a front portion of the radiator. An air-guide passage for guiding air to the core surface is defined in this radiator grille at a portion opposing the core surface. A portion of the radiator grille above the portion opposing the core surface is a wall that covers a front portion and an upper portion of the radiator.

In the radiator grille disclosed in JP-A-Sho 63-106320, the wall that covers the front portion and the upper portion of the radiator forms the portion of the radiator grill above the portion opposing the core surface. Accordingly, heat released into a space between the radiator grille and the core surface of the radiator is inconveniently trapped in a portion of the radiator grille above the portion opposing the core surface. This structure is thus disadvantageous in that the coolant of the radiator may not be cooled sufficiently.

The present invention has been made to solve or alleviate the problem described above.

### SUMMARY OF THE INVENTION

According to a first aspect of the present invention there is provided a radiator cover for a straddle-type vehicle having a radiator with a core surface disposed to face in a lateral direction of the vehicle, said cover comprising:
a body cover disposed, relative to the radiator, so as to cover an outer side of the core surface; and
a cap cover disposed on a top surface of the body cover so as to cover a cap provided above the radiator,
wherein the radiator cover has or defines a through hole in a vicinity of a boundary between the body cover and the cap cover, the through hole extending through the radiator cover from a side of the radiator to a side of an outer surface of the cap cover.

The through hole may be larger than a width of a coolant supply unit, to which the cap of the radiator is to be attached.

The cap cover may include a side wall formed so as to cover a side portion of the cap, said side wall being formed to extend vertically downward to the top surface of the body cover.

The side wall of the cap cover may be constructed to project outside of an outermost portion of the top surface of the body cover as viewed from above.

The through hole may be defined in a boundary between the side wall of the cap cover and the body cover.

A first notch may be defined in a front portion of the cap cover. The first notch may be constructed to permit a hose, which is to be connected to the radiator, to extend therethrough and externally of the radiator cover.

A second notch may be defined on an upper surface of the cap cover. The second notch may be arranged so as to correspond to an upper surface of the cap of the radiator.

An inner diameter of an inner circumferential surface of the cap cover may be greater than a maximum outer diameter of an outer periphery of the cap. The cap may be non-round or out-of-round.

The cap cover may have a semicylindrical side wall. The through hole may be defined in the semicylindrical side wall so as to extend in a circumferential direction of the side wall.

According to a second aspect of the invention, a radiator cover for a straddle-type vehicle includes: the body cover disposed, relative to a radiator having a core surface disposed to face in a lateral direction of the vehicle, so as to cover an outer side of the core surface; and a cap cover disposed on a top surface of the body cover so as to cover a cap provided above the radiator. The radiator cover has a through hole in the vicinity of the boundary between the body cover and the cap cover. The through hole extends through the radiator cover from a side of the radiator to a side of an outer surface of the cap cover.

As described above, the radiator cover has the through hole extending from the side of the radiator to the side of the outer surface of the cap cover in the vicinity of the boundary between the body cover and the cap cover. This structure allows heat in space between the body cover of the radiator cover and the radiator to escape through the through hole to the outside, thereby inhibiting heat from being trapped in the vicinity of the cap of the radiator. Consequently, coolant of the radiator can be cooled sufficiently.

According to a third aspect of the invention, a straddle-type vehicle includes a radiator having a core surface disposed to face in a lateral direction of the vehicle and a radiator cover for the radiator. The radiator cover includes a body cover disposed, relative to the radiator, so as to cover an outer side of the core surface, and a cap cover disposed on a top surface of the body cover so as to cover a cap provided above the radiator. The radiator cover has a through hole in the vicinity of the boundary between the body cover and the cap cover. The through hole extends through the radiator cover from a side of the radiator to a side of an outer surface of the cap cover.

As described above, in the straddle-type vehicle, the radiator cover has the through hole in the vicinity of the boundary between the body cover and the cap cover. The through hole extends through the radiator cover from the side of the radiator to the outer surface side of the cap cover. This structure allows the heat in the space between the body cover of the radiator cover and the radiator to escape through the through hole, thereby inhibiting heat from being trapped in the vicinity of the cap of the radiator. Consequently, the coolant of the radiator can be cooled sufficiently.

### BRIEF DESCRIPTION OF THE DRAWINGS

These and other aspects of the present invention will now be described, by way of example only, with reference to the accompanying drawings, in which:
FIG. 1 is a side view of an entire structure of a motorcycle according to an embodiment of the present invention;
FIG. 2 is across-sectional view, illustrating a structure of a radiator and its surroundings of the motorcycle according to the embodiment shown in FIG. 1;
FIG. 3 is a front view, illustrating a structure of a radiator cover of the motorcycle according to the embodiment shown in FIG. 1;
FIG. 4 is a plan view, illustrating the structure of the radiator cover of the motorcycle according to the embodiment shown in FIG. 1;
FIG. 5 is a perspective view, illustrating the structure of the radiator cover of the motorcycle according to the embodiment shown in FIG. 1;
FIG. 6 is a cross-sectional view taken along the line 100-100 of FIG. 4;
FIG. 7 is a cross-sectional view taken along the line 200-200 of FIG. 4;
FIG. 8 is a rear view, illustrating the structure of the radiator cover of the motorcycle according to the embodiment shown in FIG. 1; and
FIG. 9 is a perspective view, illustrating the structure of the radiator cover of the motorcycle according to the embodiment shown in FIG. 1.

### DETAILED DESCRIPTION OF THE DRAWINGS

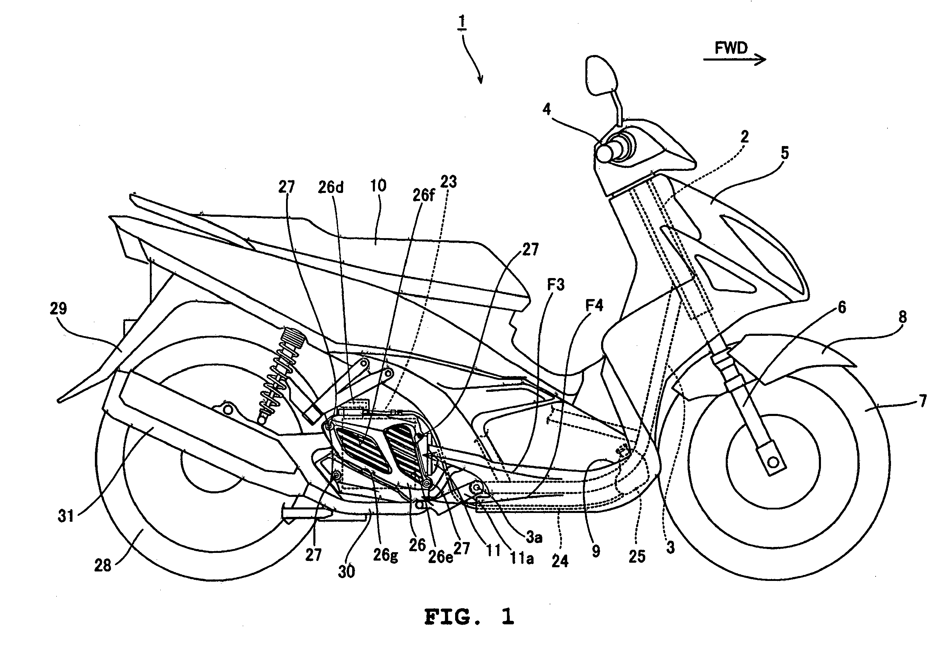

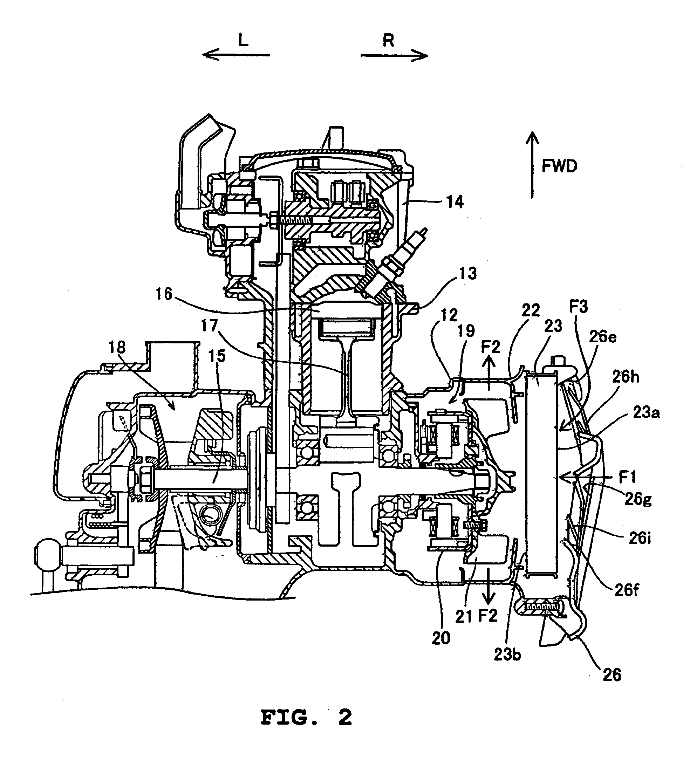

FIG. 1 is a side view of an entire structure of a motorcycle according to an embodiment of the present invention. FIGs. 2 to 9 are explanatory views of structures of a radiator cover and its surroundings of the motorcycle according to the embodiment shown in FIG. 1. In the present embodiment, a scooter-type motorcycle will be described as an example of a straddle-type vehicle according to the present invention. A direction indicated by arrow FWD is a forward direction of the motorcycle in each drawing. The structure of a motorcycle 1 according to the embodiment of the invention will be explained in detail with reference to FIGs. 1 to 9.

As shown in FIG. 1, a main frame 3 of the motorcycle 1 according to the embodiment of the invention is fixed to a lower portion of a head pipe 2. The main frame 3 extends rearward from the lower portion. The head pipe 2 and the main frame 3 form a body frame.

Handlebars 4 are rotatably attached to an upper portion of the head pipe 2. A front cowling 5 is disposed in front of the head pipe 2 to cover a front portion of the head pipe 2. A pair of front forks 6 having a suspension mechanism for absorbing vertical shocks are disposed below the head pipe 2. A front wheel 7 is rotatably attached to lower portions of the pair of front forks 6. A front fender 8 is disposed above the front wheel 7.

A foot rest 9 is disposed above a center portion of the main frame 3. A seat 10 is disposed above a rear portion of the main frame 3. An engine 11 is disposed below the rear portion of the main frame 3. Specifically, a pivot shaft 3a is provided on the rear portion of the main frame 3. The engine 11 is attached to the pivot shaft 3a with an arm member 11a therebetween to be pivotable on the pivot shaft 3a. More specifically, the engine 11 is a unit swing engine and constructed so as to hold a rear wheel 28, which will be described later, provided at a rear portion of the engine 11 such that the rear wheel 28 can swing about the pivot shaft 3a. As shown in FIG. 2, the engine 11 includes a crankcase 12, a cylinder 13 attached to a forward (the direction indicated by arrow FWD) portion of the crankcase 12, and a cylinder head 14 attached to the cylinder 13 so as to seal a forward (the direction indicated by arrow FWD) opening of the cylinder 13.

A crankshaft 15 is rotatably disposed in the crankcase 12 such that the crankshaft 15 extends in a vehicle width direction (a direction indicated by arrows L and R). A connecting rod 17, which connects a piston 16 placed in the cylinder 13 and the crankshaft 15, is attached to the crankshaft 15. A transmission mechanism 18 is disposed above the crankshaft 15 on the side indicated by arrow L. A generator mechanism 19 is disposed on the crankshaft 15 on the side indicated by arrow R. The generator mechanism 19 includes a rotor 20 that rotates with the crankshaft 15. The rotor 20 is attached to an end portion of the crankshaft 15 on the side indicated by arrow R. A suction fan 21 that rotates with the rotor 20 around a rotary shaft of the rotor 20 is provided on the rotor 20. The suction fan 21 rotates with the rotor 20 as the crankshaft 15 rotates, thereby primarily introducing air through a rear air inlet 26f, which will be described later, in a direction indicated by arrow F1 and simultaneously causing the air to flow in radial directions, indicated by arrows F2, of the suction fan 21.

A fan casing 22 made of aluminum is attached to the crankcase 12 on the side indicated by arrow R so as to cover the suction fan 21. A radiator 23 is attached to the fan casing 22 on the side indicated by arrow R. Specifically, the radiator 23 is disposed such that a core surface 23a faces the direction indicated by arrow R (a lateral direction of the vehicle) and a surface portion 23b, which is on the side opposite from the core surface 23a, opposes the suction fan 21. Accordingly, the radiator 23 is positioned such that the direction (the direction indicated by arrow F1), along which the air is flown by the suction fan 21, is generally perpendicular to the core surface 23a.

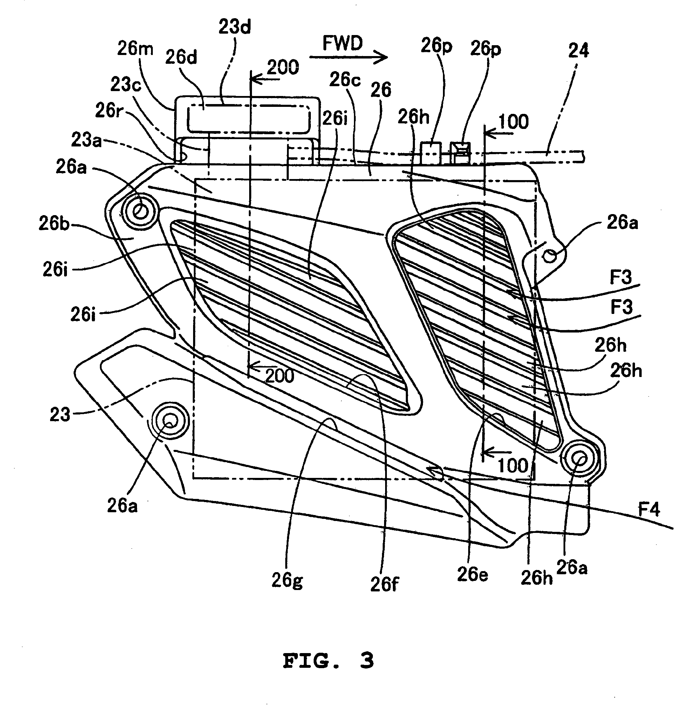

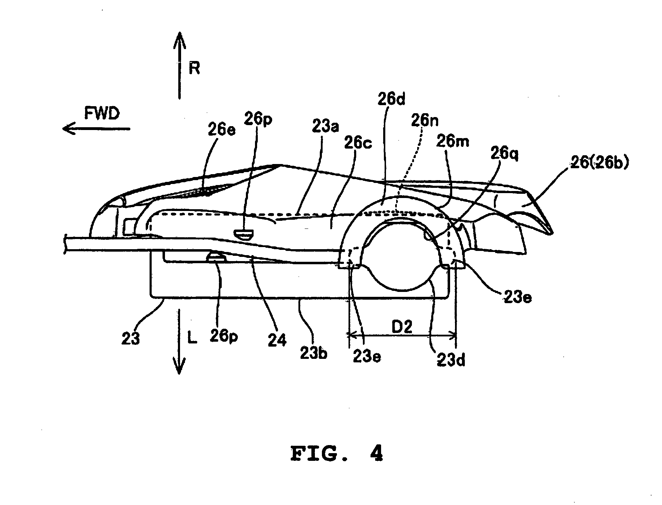

As shown in FIGs. 3 and 4, a coolant supply unit 23c, through which coolant is filled into the radiator 23, is provided on the radiator 23 above the core surface 23a. A cap 23d, which has an out-of-round or non-round shape, is attached to the coolant supply unit 23c. As shown in FIG. 4, two projections 23e each projecting outward in a radial direction of the cap 23d as viewed from above the radiator 23 are formed on the cap 23d.

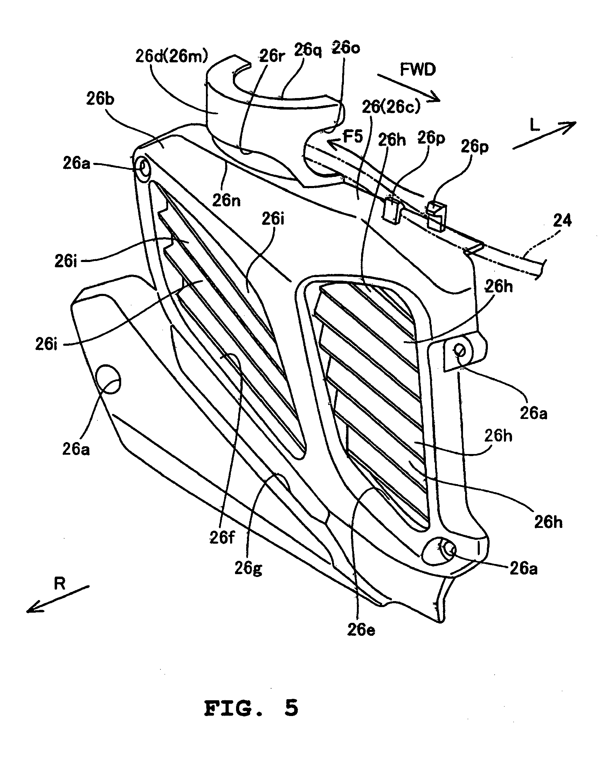

As shown in FIGs. 3 and 4, one end of a hose 24, through which coolant inside the radiator 23 can flow, is attached to a portion of the coolant supply unit 23c on the side indicated by arrow FWD. As shown in FIG. 1, the hose 24 is disposed so as to extend in the direction indicated by arrow FWD. The other end of the hose 24 is connected to a sub tank 25 provided in the vicinity of the footrest 9 on the main frame 3. This structure allows the coolant inside the radiator 23 to be transferred to the sub tank 25 through the hose 24 even when the coolant is heated to a high temperature and hence increased in volume. The sub tank 25 may therefore function as an expansion tank. As shown in FIG. 5, the hose 24 is positioned to extend out of the radiator cover 26 through a notch 26o defined in a radiator cover 26, which will be described later, to be guided to the sub tank 25 in a state of being held by a pair of hose holding claws 26p, which will be described later.

As shown in FIGs. 2 and 4, the radiator cover 26, which may be made of a resin, is disposed on the side indicated by arrow R of the core surface 23a of the radiator 23 so as to cover an outer side (the side indicated by arrow R) of the core surface 23a. The radiator cover 26 is an example of a "radiator cover for a straddle-type vehicle" of the present invention. As shown in FIGs. 3 and 5, four screw holes 26a are defined in the radiator cover 26. The radiator cover 26 is attached to the fan casing 22 with screws 27 (see FIG. 1).

In this embodiment, the radiator cover 26 includes a body cover 26b and a cap cover 26d. The body cover 26b covers the outer side (the side indicated by arrow R) of the core surface 23a of the radiator 23. The cap cover 26d is disposed on a top surface 26c of the body cover 26b so as to cover the cap 23d of the radiator 23.

The body cover 26b has a front air inlet 26e, the rear air inlet 26f, and a bottom air inlet 26g. The front air inlet 26e, the rear air inlet 26f, and the bottom air inlet 26g are each formed so as to oppose the core surface 23a of the radiator 23 (see FIG. 4) and have openings directed in different directions.

The front air inlet 26e has the opening on a forward (the direction indicated by arrow FWD) side and is formed so as to take at least a portion of running wind F3 (see FIGs. 1 and 3) thereinto. Specifically, the front air inlet 26e is provided on the front side (the side indicated by arrow FWD) of the radiator cover 26, so that the front air inlet 26e opens in a direction tilted toward the forward side (the side indicated by arrow FWD) at a predetermined angle with respect to the vehicle width direction (the direction indicated by arrows L and R) (see FIG. 3). As shown in FIG. 4, the front air inlet 26e is placed so as to oppose a forward (the direction indicated by arrow FWD) portion of the core surface 23a of the radiator 23, and has a function of guiding air (the running wind F3) to the forward (the direction indicated by arrow FWD) portion of the core surface 23a.

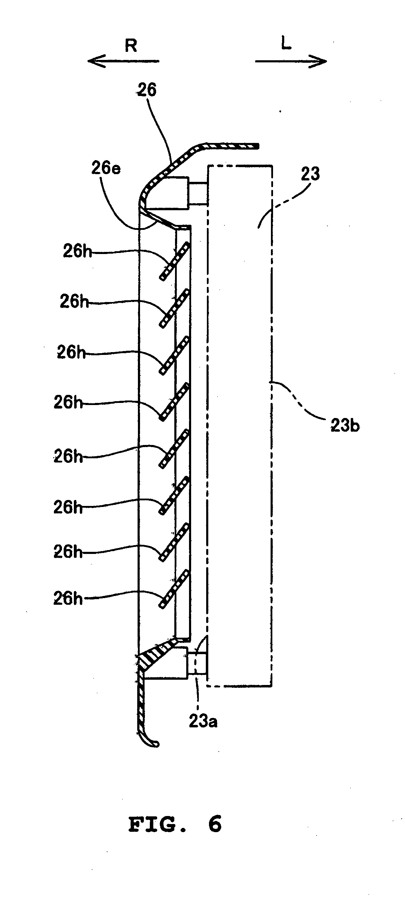

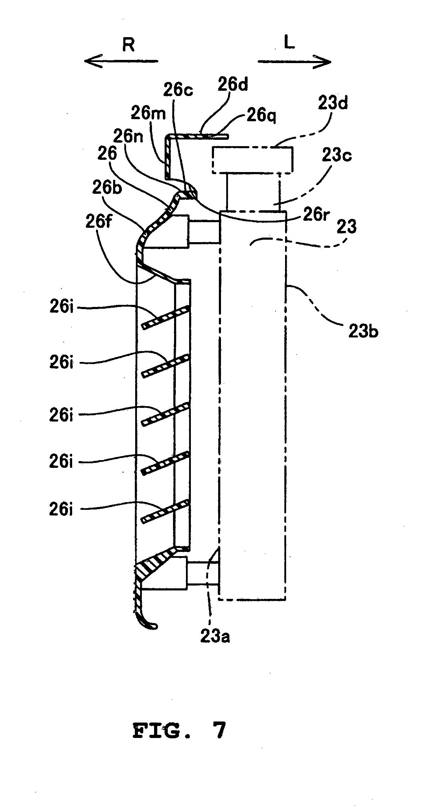

A plurality of plate-like members (fins) 26h are provided on the front air inlet 26e integrally with the radiator cover 26. The plurality of plate-like members 26h are disposed so as to extend obliquely rearward and upward from a front side of the opening of the front air inlet 26e and not to overlap with one another when viewed as a plane. Each of the plurality of plate-like members 26h is formed to have a predetermined tilt angle with respect to the core surface 23a. As shown in FIGs. 6 and 7, each plate-like member 26h (see FIG. 6) is disposed such that the predetermined tilt angle of the plate-like members 26h is smaller than a predetermined tilt angle of plate-like members 26i of the rear air inlet 26f (see FIG. 7), which will be described later, with respect to the core surface 23a. That is, the plate-like members 26h (see FIG. 6) of the front air inlet 26e are disposed such that mud and the like less easily enters the inside (the side indicated by arrow L) of the radiator cover 26 therethrough than through the plate-like members 26i (see FIG. 7) of the rear air inlet 26f.

As shown in FIGs. 3 and 5, the rear air inlet 26f has the opening on the side opposite from the forward (the direction indicated by arrow FWD) side and is formed so as to take in the suction draft F1 (see FIG. 2) sucked by the suction fan 21 (see FIG. 2). Specifically, as shown in FIGs. 2 and 5, the rear air inlet 26f is provided on the rear side of the radiator cover 26 so as to be open in a direction tilted toward the side opposite from the forward (the direction indicated by arrow FWD) side at a predetermined angle with respect to the vehicle width direction (the direction indicated by arrows L and R).

As shown in FIGs. 3 and 5, the plurality of plate-like members (fins) 26i are provided in the rear air inlet 26f integrally with the radiator cover 26. The plurality of plate-like members 26i are disposed so as to extend obliquely rearward and upward from a front side of the opening of the rear air inlet 26f and not to overlap with one another when viewed as a plane. Each of the plurality of plate-like members 26i is formed to have the predetermined tilt angle with respect to the core surface 23a. As shown in FIGs. 6 and 7, each of the plurality of plate-like members 26i (see FIG. 7) is disposed such that the predetermined tilt angle of the plate-like members 26i is greater than the predetermined tilt angle of the plate-like members 26h (see FIG. 6) of the front air inlet 26e with respect to the core surface 23a. That is, the plate-like members 26i (see FIG. 7) of the rear air inlet 26f are disposed such that air flows into the inside (the side indicated by arrow L) of the radiator cover 26 more easily therethrough than through the plate-like members 26h (see FIG. 6) of the front air inlet 26e.

As shown in FIGs. 1 and 3, the bottom air inlet 26g has the opening directed in a direction, along which at least a portion of running wind F4 (see FIG. 1) below the front air inlet 26e can be taken into an area below the rear air inlet 26f. The bottom air inlet 26g is formed so as to extend obliquely downward in the forward direction (the direction indicated by arrow FWD).

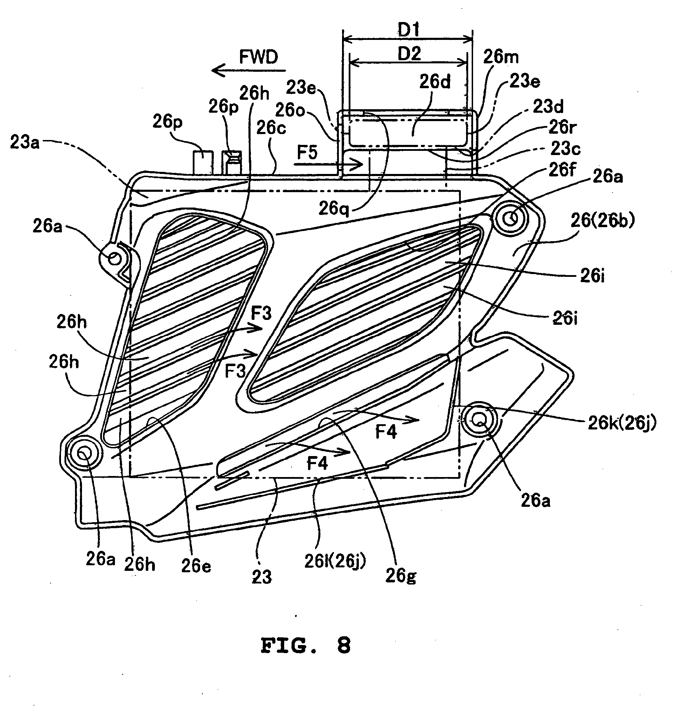

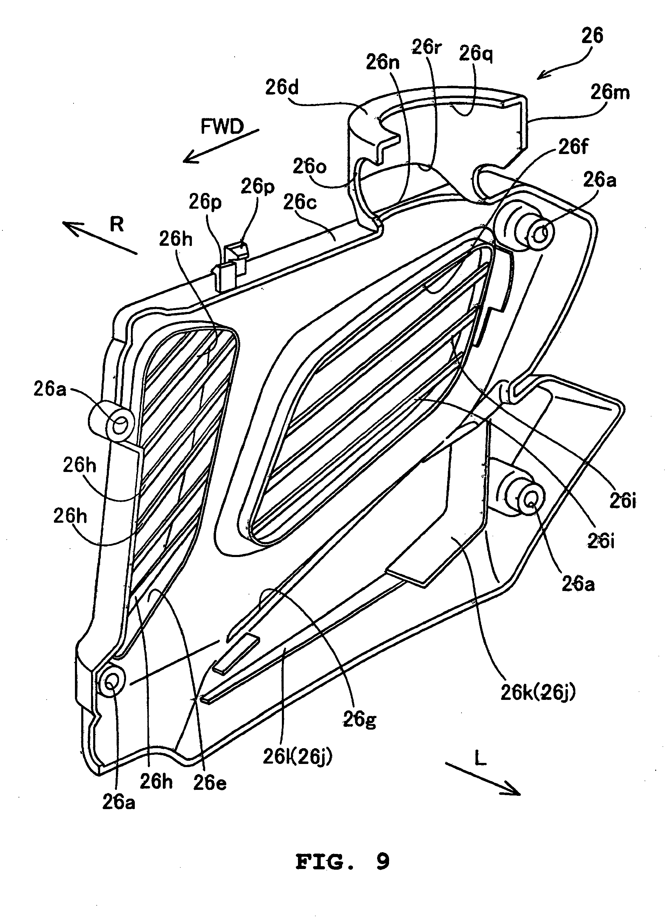

As shown in FIGs. 8 and 9, an air guide unit 26j is formed on the back surface side (the side indicated by arrow L) (see FIG. 9) of the radiator cover 26 integrally therewith. The air guide unit 26j is formed so as to guide air introduced through the bottom air inlet 26g to a lower area of the core surface 23a (see FIG. 8) of the radiator 23. The air guide unit 26j is disposed on the back surface side (the side indicated by arrow L) (see FIG. 9) of the radiator cover 26 so as to project therefrom and includes a rear air guide 26k and a bottom air guide 261. The rear air guide 26k extends downward from the vicinity of the rear end of the bottom air inlet 26g. The bottom air guide 261 is connected with the bottom end of the rear air guide 26k and extends obliquely downward in the forward direction (the direction indicated by arrow FWD). The rear air guide 26k has a function of inhibiting the air (the running air F4) (see FIG. 8) having been introduced through the bottom air inlet 26g from escaping rearward and simultaneously guiding the air to a portion opposite from a forward (the direction indicated by arrow FWD) side in the lower area of the radiator 23 (see FIG. 8). The bottom air guide 261 has a function of inhibiting the air (the running air F4) (see FIG. 8) having been introduced through the bottom air inlet 26g from escaping downward and simultaneously guiding the air to a portion opposite from the forward (the direction indicated by arrow FWD) side in the lower area of the radiator 23 (see FIG. 8).

As shown in FIGs. 3 and 5, in this embodiment, a side wall 26m is provided on the cap cover 26d, which is formed on the top surface 26c of the body cover 26b, so as to cover a side portion of the cap 23d (see FIG. 3). The side wall 26m is formed so as to extend vertically downward from a lateral vicinity of the cap 23d (see FIG. 3) to the top surface 26c of the body cover 26b. As shown in FIG. 4, the side wall 26m projects to the outer side (the side indicated by arrow R) of an outermost portion 26n of the top surface 26c of the body cover 26b as viewed from above.

In this embodiment, as shown in FIGs. 4 and 8, the side wall 26m of the cap cover 26d is constructed such that an inner diameter D1 (see FIG. 8) of the inner circumferential surface of the side wall 26m (the cap cover 26d) is greater than a distance D2 between opposite ends of the two projections 23e, which is a maximum outer diameter of the outer periphery of the cap 23d. That is, the cap cover 26d is constructed so as not to come into contact with the cap 23d even when the cap 23d is rotated relative to the coolant supply unit 23c.

In this embodiment, as shown in FIGs. 3 and 4, the side wall 26m of the cap cover 26d has a semicylindrical shape and is constructed so as to cover the coolant supply unit 23c and the cap 23d of the radiator 23 from the side indicated by arrow R. As shown in FIG. 5, the semicircular notch 26o is defined in a front (the side indicated by arrow FWD) portion of the side wall 26m of the cap cover 26d. The notch 26o is defined by cutting the side wall 26m on the side indicated by arrow L to open so that running wind F5 flowing from the forward side (the side indicated by arrow FWD) flows into the inside of the cap cover 26d. That is, as shown in FIG. 8, the notch 26o is provided to cause the running wind F5 to impinge on the vicinity of the coolant supply unit 23c of the radiator 23, thereby cooling the vicinity of the coolant supply unit 23c. The notch 26o is an example of a "first notch" of the present invention.

As shown in FIG. 5, the notch 26o is constructed to allow the hose 24 connected to the coolant supply unit 23c, on the side indicated by arrow FWD, of the radiator 23 to extend from inside of the radiator cover 26 to outside of the same therethrough. The hose holding claws 26p, each being provided to guide the hose 24 to the side indicated by arrow FWD, are formed on the top surface 26c on the side, with respect to the notch 26o, indicated by arrow FWD so as to project upward. The pair of hose holding claws 26p are disposed to have a predetermined clearance therebetween in each of a fore-and-aft direction and in the lateral direction (the direction indicated by arrows R and L), and constructed so as to restrain a lateral movement (in the direction indicated by arrows R and L) of the hose 24 extending in the fore-and-aft direction.

A semicircular notch 26q is defined in an upper surface of the cap cover 26d of the radiator 26 so as to correspond to an upper surface of the cap 23d of the radiator 23. The notch 26q is defined by cutting the side indicated by arrow L of the upper surface of the cap cover 26d to open. The notch 26q is an example of a "second notch" of the present invention.

In this embodiment, the radiator cover 26 has a through hole 26r in the vicinity of the boundary between the body cover 26b and the cap cover 26d. The through hole 26r extends through the radiator cover 26 from the side of the radiator 23 (the side indicated by arrow L) to the outer (the side indicated by arrow R) surface of the cap cover 26d. Specifically, the through hole 26r is defined in the boundary between the side wall 26m and the top surface 26c of the body cover 26b so as to extend in a circumferential direction of the side wall 26m. As shown in FIG. 3, a width of the through hole 26r in the fore-and-aft direction is greater than a width (outer diameter) of the coolant supply unit 23c of the radiator 23. The side wall 26m is vertically positioned to correspond to the coolant supply unit 23c of the radiator 23.

As described above, the rear wheel 28 is rotatably disposed at the rear portion of the engine 11. A rear fender 29 is provided above the rear wheel 28 to cover the rear wheel 28 from above. Furthermore, an exhaust pipe 30 is connected to the engine 11. The exhaust pipe 30 is disposed so as to extend rearward and is coupled with a muffler 31.

In this embodiment, as described above, the radiator cover 26 has the through hole 26r in the vicinity of the boundary between the body cover 26b and the cap cover 26d. The through hole 26r extends through the radiator cover 26 from the side of the radiator 23 to the side of the outer surface (outer side of the side wall 26m) of the cap cover 26d. This structure allows heat in space between the body cover 26b of the radiator cover 26 and the radiator 23 to escape through the through hole 26r, thereby inhibiting heat from being trapped in the vicinity of the cap 23d of the radiator 23. Consequently, the coolant of the radiator 23 can be cooled sufficiently.

In this embodiment, as described above, the through hole 26r is constructed to be greater than the width of the coolant supply unit 23c, to which the cap 23d of the radiator 23 is to be attached, thereby causing a large amount of air to flow into the vicinity of the coolant supply unit 23c. Consequently, the vicinity of the coolant supply unit 23c in the radiator 23 can be cooled, and hence the coolant of the radiator 23 can be cooled more sufficiently.

In this embodiment, as described above, the side wall 26m is formed so as to extend vertically downward to the top surface 26c of the body cover 26b. Accordingly, in contrast to a configuration in which the side wall 26m is formed in the shape conforming to the shape of the cap 23d of the radiator 23 and the shape of the coolant supply unit 23c having an outer diameter smaller than that of the cap 23d, a sufficient clearance can be ensured between the coolant supply unit 23c of the radiator 23 and the side wall 26m. This improves effectiveness in heat dissipation.

In this embodiment, as described above, the through hole 26r is defined in the boundary between the side wall 26m of the cap cover 26d and the body cover 26b. Accordingly, dissipation of the heat in the space between the body cover 26b of the radiator cover 26 and the radiator 23 to the outside is attained while protecting the vicinity of the cap 23d of the radiator 23.

In this embodiment, as described above, the notch 26o is defined in the front (the side indicated by arrow FWD) portion of the cap cover 26d, thereby causing the running air F5 to flow into the inside of the cap cover 26d. This also allows the coolant of the radiator 23 to be cooled.

In this embodiment, as described above, the notch 26o is defined such that the hose 24, which is to be connected to the radiator 23, can extend out of the radiator cover 26 through the notch 26o. Hence, the notch 26o performs not only the function of guiding the running wind F5 to the inside of the cap cover 26d but also the function of allowing the hose 24 to extend therethrough.

In this embodiment, as described above, the notch 26q is defined in the upper surface of the cap cover 26d so as to correspond to the upper surface of the cap 23d of the radiator 23. Accordingly, the heat in the space between the body cover 26b of the radiator cover 26 and the radiator 23 can escape not only through the through hole 26r but also through the notch 26q. This also improves effectiveness in heat dissipation.

In this embodiment, as described above, the inner diameter D1 of the inner circumferential surface of the side wall 26m of the cap cover 26d is greater than the distance D2 between the both ends of the two projections 23e, which is the maximum outer diameter of the outer periphery of the cap 23d, which has the out-of-round shape. This structure can restrain the cap 23d from interfering with the inner circumferential surface of the side wall 26m of the cap cover 26d.

In this embodiment, as described above, the through hole 26r is defined so as to extend in the circumferential direction of the semicylindrical side wall 26m, thereby facilitating perforation of the through hole 26r extending in the fore-and-aft direction and in the vehicle width direction (the direction indicated by arrows R and L). Consequently, the heat in the space between the body cover 26b of the radiator cover 26 and the radiator 23 can be expelled through the through hole 26r efficiently.

It is to be understood that the embodiment of the invention disclosed herein is an exemplary one in all respects and not intended in any way to limit the scope of the present invention. The scope of the invention is not defined by the description of the preferred embodiment, but defined by the scope of the claims, and includes the meanings equivalent to those of the scope of the claims as well as any modifications that fall within the scope of the claims.

For instance, in this embodiment, a scooter-type motorcycle is adopted as an example of a straddle-type vehicle including a radiator cover. However, the present invention is not limited thereto, and can be applied to any other straddle-type vehicles, such as three-wheel vehicles and all terrain vehicles (ATV), provided with a radiator cover.

This embodiment has described the example in which the through hole is defined in the cap cover at the boundary between the body cover and the cap cover. However, the present invention is not limited thereto, and the through hole may be defined in the body cover at the boundary between the body cover and the cap cover.

This embodiment has described the example in which the width of the through hole in the fore-and-aft direction is greater than the width of the coolant supply unit of the radiator in the fore-and-aft direction. However, the present invention is not limited thereto, and the width of the through hole in the fore-and-aft direction is not necessarily greater than the width of the coolant supply unit of the radiator in the fore-and-aft direction.

This embodiment has described the example in which the hose extends out of the radiator cover through the notch defined in the front portion of the cap cover. However, the present invention is not limited thereto, and the hose does not necessarily extend out of the radiator cover through the notch defined in the front portion of the cap cover.

This embodiment has described the example in which the through hole is defined in the semicylindrical side wall of the cap cover so as to extend in a circumferential direction of the side wall. However, the present invention is not limited thereto, and the through hole may be defined in the semicylindrical side wall of the cap cover so as to extend in a vertical direction intersecting with the circumferential direction, or may be formed in the shape of a circle in front view.

This embodiment has described the example in which the cap cover is formed only at the portion opposing the cap of the radiator and the coolant supply unit. However, the present invention is not limited thereto, and the cap cover may be formed so as to extend above the body cover to reach a portion farther than the portion opposing the cap of the radiator and the coolant supply unit.

### Description of Reference Numerals and Symbols

1: motorcycle (vehicle)
23: radiator
23a: core surface
23c: coolant supply unit
23d: cap
24: hose
26: radiator cover (radiator cover for straddle-type vehicle)
26b: body cover
26c: top surface
26d: cap cover
26o: notch (first notch)
26q: notch (second notch)
26m: side wall
26n: outermost portion
26r: through hole
D1: inner diameter
D2: distance (maximum outer diameter)

## Claims

1. A radiator cover (26) for a straddle-type vehicle (1) having a radiator (23) with a core surface (23a) disposed to face in a lateral direction of the vehicle (1), said cover (26) comprising:
a body cover (26b) disposable, relative to the radiator (23), so as to cover an outer side of the core surface (23a); **characterized by**:
a cap cover (26d) disposed on a top surface of the body cover (26b) so as to cover a cap (23d) provided above the radiator (23),
wherein the radiator cover (26) defines a through hole (26r) in a vicinity of a boundary between the body cover (26b) and the cap cover (26d), the through hole (26r) extending through the radiator cover (26) from a side of the radiator (23) to a side of an outer surface of the cap cover (26d).

2. The radiator cover (26) according to claim 1, wherein the through hole (26r) is larger than a width of a coolant supply unit (23c) , to which the cap (23d) of the radiator (23) is to be attached.

3. The radiator cover (26) according to claim 1 or 2, wherein the cap cover (26d) includes a side wall (26m) formed so as to cover a side portion of the cap (23d), said side wall (26m) being formed to extend vertically downward to the top surface (26c) of the body cover (26b).

4. The radiator cover (26) according to claim 3, wherein the side wall (26m) of the cap cover (26d) is constructed to project outside of an outermost portion (26n) of the top surface (26c) of the body cover (26b) as viewed from above.

5. The radiator cover (26) according to claim 3 or 4, wherein the through hole (26r) is defined in a boundary between the side wall (23m) of the cap cover (26d) and the body cover (26b) .

6. The radiator cover (26) according to any preceding claim, wherein a first notch (26o) is defined in a front portion of the cap cover (26d).

7. The radiator cover (26) according to claim 6, wherein the first notch (26o) is constructed to permit a hose (24), which is to be connected to the radiator (23), to extend therethrough and externally of the radiator cover (26).

8. The radiator cover (26) according to any preceding claim, wherein a second notch (26q) is defined on an upper surface of the cap cover (26d) so as to correspond to an upper surface of the cap (23d) of the radiator (23).

9. The radiator cover (26) according to any preceding claim, wherein an inner diameter (D1) of an inner circumferential surface of the cap cover (26d) is greater than a maximum outer diameter (D2) of an outer periphery of the cap (23d).

10. The radiator cover (26) according to any preceding claim, wherein the cap cover (26d) has a semicylindrical side wall (26m); and
the through hole (26r) is defined in the semicylindrical side wall (26m) so as to extend in a circumferential direction of the side wall (26m).

11. A straddle-type vehicle (1) comprising:
a radiator (23) having a core surface (23a) disposed to face in a lateral direction of the vehicle (1); and
a radiator cover (26) including: a body cover (26b) disposed, relative to the radiator (23), so as to cover an outer side of the core surface (23a), **characterized by**: a cap cover (26d) disposed on a top surface (26c) of the body cover (26b) so as to cover a cap (23d) provided above the radiator (23),
wherein the radiator cover (26) defines a through hole (26r) in a vicinity of a boundary between the body cover (26b) and the cap cover (26d), the through hole (26r) extending through the radiator cover (26) from a side of the radiator (23) to a side of an outer surface of the cap cover (26d).

## Patentansprüche

1. Heizkörperabdeckung (26) für ein Grätschsitzfahrzeug (1) mit einem Heizkörper (23) mit einer Blockfläche (23a), die so angeordnet ist, dass sie in einer seitlichen Richtung des Fahrzeuges (1) liegt, wobei die Abdeckung (26) aufweist:
eine Karosserieabdeckung (26b), die relativ zum Heizkörper (23) angeordnet werden kann, um so eine Außenseite der Blockfläche (23a) abzudecken, **gekennzeichnet durch**:
eine Kappenabdeckung (26d), die auf einer oberen Fläche der Karosserieabdeckung (26b) angeordnet ist, um so eine Kappe (23d) abzudecken, die über dem Heizkörper (23) vorhanden ist,
wobei die Heizkörperabdeckung (26) ein Durchgangsloch (26r) in einer Nähe der Grenze zwischen der Karosserieabdeckung (26b) und der Kappenabdeckung (26d) definiert, wobei sich das Durchgangsloch (26r) **durch** die Heizkörperabdeckung (26) von einer Seite des Heizkörpers (23) zu einer Seite einer Außenfläche der Kappenabdeckung (26d) erstreckt.

2. Heizkörperabdeckung (26) nach Anspruch 1, bei der das Durchgangsloch (26r) größer ist als eine Breite einer Kühlmittelzuführanlage (23c), auf der die Kappe (23d) des Heizkörpers (23) befestigt werden soll.

3. Heizkörperabdeckung (26) nach Anspruch 1 oder 2, bei der die Kappenabdeckung (26d) eine Seitenwand (26m) umfasst, die ausgebildet ist, um einen Seitenabschnitt der Kappe (23d) zu bedecken, wobei die Seitenwand (26m) ausgebildet ist, um sich vertikal nach unten zur oberen Fläche (26c) der Karosserieabdeckung (26b) zu erstrecken.

4. Heizkörperabdeckung (26) nach Anspruch 3, bei der die Seitenwand (26m) der Kappenabdeckung (26d) so konstruiert ist, dass sie außerhalb eines äußersten Abschnittes (26n) der oberen Fläche (26c) der Karosserieabdeckung (26b) vorsteht, wenn von oben betrachtet wird.

5. Heizkörperabdeckung (26) nach Anspruch 3 oder 4, bei der das Durchgangsloch (26r) in einer Grenze zwischen der Seitenwand (23m) der Kappenabdeckung (26d) und der Karosserieabdeckung (26b) definiert wird.

6. Heizkörperabdeckung (26) nach einem der vorhergehenden Ansprüche, bei der eine erste Kerbe (26o) in einem vorderen Abschnitt der Kappenabdeckung (26d) definiert wird.

7. Heizkörperabdeckung (26) nach Anspruch 6, bei der die erste Kerbe (26o) konstruiert ist, damit sich ein Schlauch (24), der mit dem Heizkörper (23) verbunden werden soll, dort hindurch und außerhalb der Heizkörperabdeckung (26) erstrecken kann.

8. Heizkörperabdeckung (26) nach einem der vorhergehenden Ansprüche, bei der eine zweite Kerbe (26q) auf einer oberen Fläche der Kappenabdeckung (26d) definiert wird, um so einer oberen Fläche der Kappe (23d) des Heizkörpers (23) zu entsprechen.

9. Heizkörperabdeckung (26) nach einem der vorhergehenden Ansprüche, bei der ein Innendurchmesser (D1) einer inneren Umfangsfläche der Kappenabdeckung (26d) größer ist als ein maximaler Außendurchmesser (D2) eines äußeren Umfanges der Kappe (23d).

10. Heizkörperabdeckung (26) nach einem der vorhergehenden Ansprüche, bei der die Kappenabdeckung (26d) eine halbzylindrische Seitenwand (26m) aufweist; und
das Durchgangsloch (26r) in der halbzylindrischen Seitenwand (26m) definiert wird, um sich so in einer Umfangsrichtung der Seitenwand (26m) zu erstrecken.

11. Grätschsitzfahrzeug (1), das aufweist:
einen Heizkörper (23) mit einer Blockfläche (23a), die so angeordnet ist, dass sie in einer seitlichen Richtung des Fahrzeuges (1) liegt; und
eine Heizkörperabdeckung (26), die umfasst: eine Karosserieabdeckung (26b), die relativ zum Heizkörper (23) so angeordnet ist, dass sie eine Außenseite der Blockfläche (23a) bedeckt, **gekennzeichnet durch**: eine Kappenabdeckung (26d), die auf einer oberen Fläche (26c) der Karosserieabdeckung (26b) angeordnet ist, um so eine Kappe (23d) abzudecken, die über dem Heizkörper (23) vorhanden ist,
wobei die Heizkörperabdeckung (26) ein Durchgangsloch (26r) in einer Nähe der Grenze zwischen der Karosserieabdeckung (26b) und der Kappenabdeckung (26d) definiert, wobei sich das Durchgangsloch (26r) **durch** die Heizkörperabdeckung (26) von einer Seite des Heizkörpers (23) zu einer Seite einer Außenfläche der Kappenabdeckung (26d) erstreckt.

## Revendications

1. Couvercle de radiateur (26) pour un véhicule du type à enfourcher (1), comportant un radiateur (23) avec une surface de faisceau (23a), agencée de sorte à être orientée dans une direction latérale du véhicule (1), ledit couvercle (26) comprenant :
un couvercle de corps (26b), pouvant être agencé par rapport au radiateur (23) de sorte à recouvrir un côté externe de la surface de faisceau (23a) ; **caractérisé par** :
un couvercle de bouchon (26d), agencé sur une surface supérieure du couvercle du corps (26b), de sorte à recouvrir un bouchon (23d) agencé au-dessus du radiateur (23) ;
dans lequel le couvercle du radiateur (26) définit un trou de passage (26r) au voisinage d'une limite entre le couvercle du corps (26b) et le couvercle du bouchon (26d), le trou de passage (26r) s'étendant à travers le couvercle du radiateur (26) d'un côté du radiateur (23) vers un côté d'une surface externe du couvercle du bouchon (26d).

2. Couvercle de radiateur (26) selon la revendication 1, dans lequel le trou de passage (26r) est plus grand qu'une largeur d'une unité d'alimentation d'un liquide de refroidissement (23c) sur laquelle le bouchon (23d) du radiateur (23) doit être fixé.

3. Couvercle de radiateur (26) selon les revendications 1 ou 2, dans lequel le couvercle du bouchon (26d) englobe une paroi latérale (26m), formée de sorte à recouvrir une partie latérale du bouchon (23d), ladite paroi latérale (26m) étant formée de sorte à s'étendre verticalement vers le bas, vers la surface supérieure (26c) du couvercle du corps (26b).

4. Couvercle de radiateur (26) selon la revendication 3, dans lequel la paroi latérale (26m) du couvercle du bouchon (26d) est construite de sorte à déborder vers l'extérieur d'une partie externe extrême (26n) de la surface supérieure (26c) du couvercle du corps (26b), vu d'en haut.

5. Couvercle de radiateur (26) selon les revendications 3 ou 4, dans lequel le trou de passage (26r) est défini dans une limite entre la paroi latérale (23m) du couvercle du bouchon (26d) et le couvercle du corps (26b).

6. Couvercle de radiateur (26) selon l'une quelconque des revendications précédentes, dans lequel une première encoche (26o) est définie dans une partie avant du couvercle du bouchon (26d).

7. Couvercle de radiateur (26) selon la revendication 6, dans lequel la première encoche (26o) est construite de sorte à permettre à un tuyau (24), devant être raccordé au radiateur (23), de la traverser et de s'étendre à l'extérieur du couvercle du radiateur (26).

8. Couvercle de radiateur (26) selon l'une quelconque des revendications précédentes, dans lequel une deuxième encoche (26q) est définie sur une surface supérieure du couvercle du bouchon (26d), de sorte à correspondre à une surface supérieure du bouchon (23d) du radiateur (23).

9. Couvercle de radiateur (26) selon l'une quelconque des revendications précédentes, dans lequel un diamètre intérieur (D1) d'une surface circonférentielle interne du couvercle du bouchon (26d) est supérieur à un diamètre extérieur maximal (D2) d'une périphérie externe du bouchon (23d).

10. Couvercle de radiateur (26) selon l'une quelconque des revendications précédentes, dans lequel le couvercle du bouchon (26d) comporte une paroi latérale semi-cylindrique (26m) ; et
le trou de passage (26r) étant défini dans la paroi latérale semi-cylindrique (26m), de sorte à s'étendre dans une direction circonférentielle de la paroi latérale (26m).

11. Véhicule du type à enfourcher (1), comprenant :
un radiateur (23), comportant une surface de faisceau (23a) agencée de sorte à être orientée dans une direction latérale du véhicule (1) ; et
un couvercle de radiateur (26), englobant : un couvercle de corps (26b), agencé par rapport au radiateur (23) de sorte à recouvrir un côté externe de la surface de faisceau (23a), **caractérisé par** : un couvercle de bouchon (26d), agencé sur une surface supérieure (26c) du couvercle du corps (26b), de sorte à recouvrir un bouchon (23d) agencé au-dessus du radiateur (23) ;
dans lequel le couvercle du radiateur (26) définit un trou de passage (26r) au voisinage d'une limite entre le couvercle du corps (26b) et le couvercle du bouchon (26d), le trou de passage (26r) s'étendant à travers le couvercle du radiateur (26) d'un côté du radiateur (23) vers un côté d'une surface externe du couvercle du bouchon (26d).
